# EUROPÄISCHE PATENTANMELDUNG

(11) **EP 1 643 281 A1**
(43) Veröffentlichungstag der Anmeldung: **05.04.2006**
(21) Anmeldenummer: 04023524.4
(22) Anmeldetag: 02.10.2004
(51) Int. Cl.: G02B 7/02, B23K 26/42

(54) **Optisches Element einer Laserbearbeitungsmaschine und Halterung des optischen Elements**

(71) Anmelder: TRUMPF Werkzeugmaschinen GmbH + Co. KG, 71254 Ditzingen (DE)
(72) Erfinder: Lambert, Martin, 71404 Korb (DE); Weick, Jürgen-Michael, 71679 Asperg (DE)
(74) Vertreter: Kohler Schmid Möbus

(57) **Zusammenfassung**

Ein optisches Element (7) zum Einbau in eine Halterung an einer Laserbearbeitungsmaschine weist an seiner Umfangsfläche mindestens eine Profilierung (16) auf. Dies gewährleistet einen verdrehsicheren Einbau.

## Beschreibung

Die vorliegende Erfindung betrifft ein optisches Element zum Einbau in eine Halterung einer Laserbearbeitungsmaschine und eine Halterung des optischen Elements. Unter einem optischen Element wird im Rahmen der Erfindung eine Fokussierlinse, ein Schutzglas oder ein Fenster des Laserbearbeitungskopfes oder dergleichen verstanden.

Optische Elemente wie Linsen, z.B. Meniskuslinsen, sind am Außendurchmesser normalerweise rund geschliffen. Die in CO₂-Lasern eingesetzten Linsen sind außerdem für gewöhnlich unzentriert. Der Zentrierfehler ist bei einer 7,5" Linse typischerweise < 0,1 mm nach der Justage. Wenn eine Linse zur Reinigung entnommen wird, muss sie danach neu eingepulst (nachjustiert) werden, da eine Zentrierung von Fokus zu Düse besser als 0,05 mm gefordert ist und die Lage des optischen Elements relativ zur Halterung nach dem erneuten Einbau aufgrund der kreisförmigen Umfangsfläche im Allgemeinen verdreht ist.

Bei der Bearbeitung von Werkstücken mithilfe einer Maschine zum thermischen Schweißen oder Schneiden, insbesondere einer Laserbearbeitungsmaschine, kann es zur Verunreinigung der Schneidlinsen kommen. Verunreinigungen, Ablagerungen oder Beschädigungen der Optikoberfläche führen zu erhöhter Absorption der Laserstrahlung. Infolgedessen erhöht sich die thermische Belastung des optischen Elements. Dies führt letztlich zu einer spürbaren Minderung der im Bearbeitungsbereich verfügbaren Laserleistung. Bei starker Verschmutzung, insbesondere durch Spritzer, kann die erhöhte Absorption der Laserstrahlung zur Zerstörung des optischen Elements führen.

In der WO 99/59762 wird eine Vorrichtung zur Überprüfung des Zustandes einer Glasplatte in einer Laserbearbeitungsanlage bezüglich der Kontaminierung durch Schmutzpartikel beschrieben. Die Vorrichtung weist eine Halterung für die Glasplatte auf, an deren Außenseite ein Temperatursensor zum Detektieren von Temperaturerhöhungen angebracht ist. Die Temperaturerhöhungen werden durch verstärkte Strahlungsabsorption der Glasplatte aufgrund der Schmutzpartikel hervorgerufen.

Demgegenüber ist es die Aufgabe der vorliegenden Erfindung, ein optisches Element und eine Halterung der eingangs genannten Art dahingehend weiterzubilden, dass ein verdrehsicherer Einbau des optischen Elements in die Halterung gewährleistet ist. Insbesondere soll auch eine Überwachung zum Schutz des optischen Elements vereinfacht werden.

Diese Aufgabe wird erfindungsgemäß durch ein optisches Element der eingangs genannten Art gelöst, das an seiner Umfangsfläche mindestens eine Profilierung aufweist.

Wenn ein solches optisches Element durch einen verdrehgesicherten Einbau immer gleich orientiert wird, ist die Nachjustage nach dem Reinigen und dem Wiedereinbau überflüssig. Die Profilierung kann z.B. durch eine Fläche, einen Absatz, einen Vorsprung, einen Grat oder einen eingesteckten Stift oder dergleichen gebildet werden.

In einer bevorzugten Ausführungsform ist die Profilierung als profilierter Flächenanschliff, insbesondere als Kerbe, ausgebildet. Hierdurch wird eine besonders verdrehsichere Halterung des optischen Elements ermöglicht.

In einer besonders bevorzugten, alternativen Ausführungsform ist die Profilierung als planer Flächenanschliff ausgebildet. Ein solcher Flächenanschliff lässt sich besonders einfach herstellen.

In einer besonders bevorzugten Weiterbildung dieser Ausführungsform ist die Planfläche als Reflexionsfläche zur Reflexion eines Lichtstrahls ausgebildet. Der reflektierte Lichtstrahl kann zur Prüfung einer Photodiode vor der Laserbearbeitung genutzt werden. Diese Photodiode kann später zur Erfassung der Strahlungsintensität bzw. der Strahlungswärme dienen, welche zu der thermischen Belastung des optischen Elements führt. Hierdurch kann eine Überwachung des optischen Elements besonders vorteilhaft durchgeführt werden.

In einer äußerst vorteilhaften Ausführungsform weist die Halterung des optischen Elements eine Strahlungsmesseinrichtung mit einer an einer ersten Position der Umfangsfläche positionierten Lichtquelle zum Aussenden eines Lichtstrahls zur Reflexionsfläche und einem an einer zweiten Position der Umfangsfläche positionierten Sensorelement zum Empfangen des von der Reflexionsfäche reflektierten Lichtstrahls auf. Eine Intensitätsänderung bedeutet eine zunehmende thermische Belastung des optischen Elements. In einer vorteilhaften Weiterbildung ist die Lichtquelle als Leuchtdiode und das Sensorelement als Photodiode ausgebildet. Hierdurch wird ein besonders einfacher und kostengünstiger Aufbau der Strahlungsmesseinrichtung ermöglicht.

In einer bevorzugten Ausführungsform weist der Flächenanschliff eine geschliffene oder polierte Oberfläche auf. Je nach Eignung für die Messung mithilfe der Photodiode wird die Beschaffenheit der angeschliffenen Fläche angepasst.

Die Aufgabe wird erfindungsgemäß auch durch eine Halterung der eingangs genannten Art gelöst, welche einen gefedert gelagerten Klemmkörper mit einer Druckfläche zum Aufbringen von Druck in radialer Richtung auf die Profilierung des optischen Elements aufweist. Insbesondere kann die Form der Druckfläche an die Form eines Flächenanschliffs angepasst sein. Hierdurch wird ein passgenaues Einbauen des optischen Elements ermöglicht.

Bei einer vorteilhaften Ausführungsform umfasst der Klemmkörper einen Temperatursensor zur Temperaturmessung des optischen Elements. Der Klemmkörper steht über die Druckfläche in direktem Kontakt mit der Profilierung und ermöglicht daher eine berührende Temperaturmessung.

Ein bevorzugtes Ausführungsbeispiel der Erfindung ist in der schematischen Zeichnung dargestellt. Es zeigt im Einzelnen:
- **Fig. 1**: eine Laserbearbeitungsanlage;
- **Fig. 2**: eine perspektivische Darstellung einer Halterung eines optischen Elements des Laserbearbeitungskopfs der Laserbearbeitungsanlage;
- **Fig. 3**: eine perspektivische Darstellung des Zusammenbaus der Halterung;

- **Fig. 4**: eine Seitenansicht des optischen Elements;
- **Fig. 5**: eine Draufsicht des optischen Elements mit einer Überwachungseinrichtung.

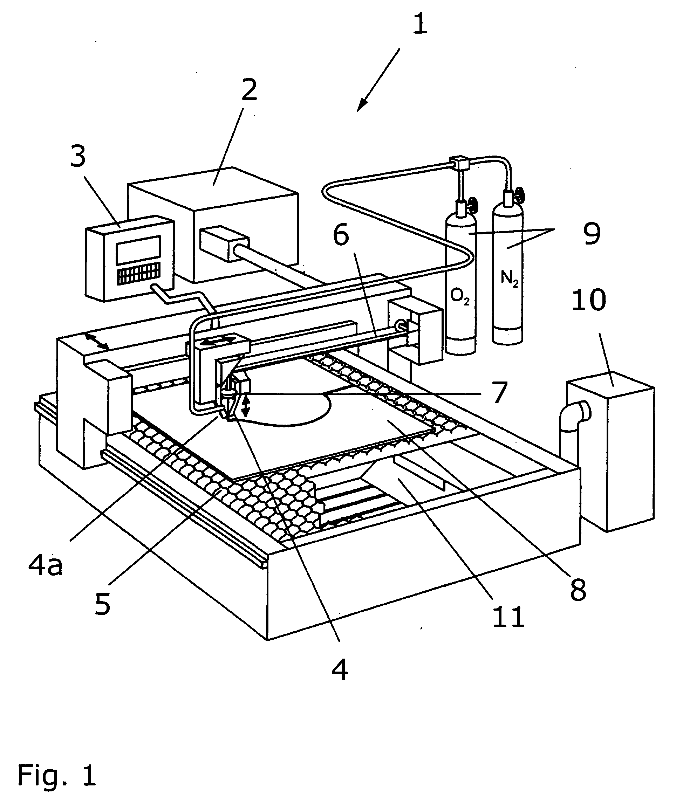

Aus der **Fig. 1** ist der Aufbau einer Laserbearbeitungsanlage **1** zum Laserschneiden mit einem CO₂-Laser **2,** einer Steuereinrichtung **3,** einem Laserbearbeitungskopf **4** (Düse **4a)** und einer Werkstückauflage **5** ersichtlich. Ein erzeugter Laserstrahl **6** wird mithilfe von Umlenkspiegeln zum Laserbearbeitungskopf 4 geführt und mithilfe einer Fokussierlinse **7** auf ein Werkstück **8** gerichtet.

Bevor eine durchgängige Schnittfuge entsteht, muss der Laserstrahl 6 das Werkstück 8 durchdringen. Das Blech 8 muss an einer Stelle punktförmig geschmolzen oder oxidiert werden, und die Schmelze muss ausgeblasen werden. Der Einstechvorgang kann schnell (d.h. mit voller Laserleistung) oder langsam (über eine sog. "Rampe") erfolgen.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **9** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Beim Schneiden mit Sauerstoff wird in der Regel mit einem Gasdruck von maximal 6 bar gearbeitet. Dort, wo der Laserstrahl 6 auf das Blech 8 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **10** aus einer Absaugkammer **11** abgesaugt werden. Beim Oxidationsvorgang (exotherme Reaktion) wird zusätzlich Energie frei, die den Schneidprozess begünstig. In den Materialdicken, bei welchen für das Sauerstoffschneiden und das Stickstoff-Hochdruckschneiden dieselbe Laserleistung verwendet werden kann, ist es bei einer Verwendung von Sauerstoff als Schneidgas möglich, mit deutlich höheren Schneidgeschwindigkeiten zu arbeiten oder höhere Materialdicken zu trennen, als es beim Einsatz von Stickstoff der Fall wäre.

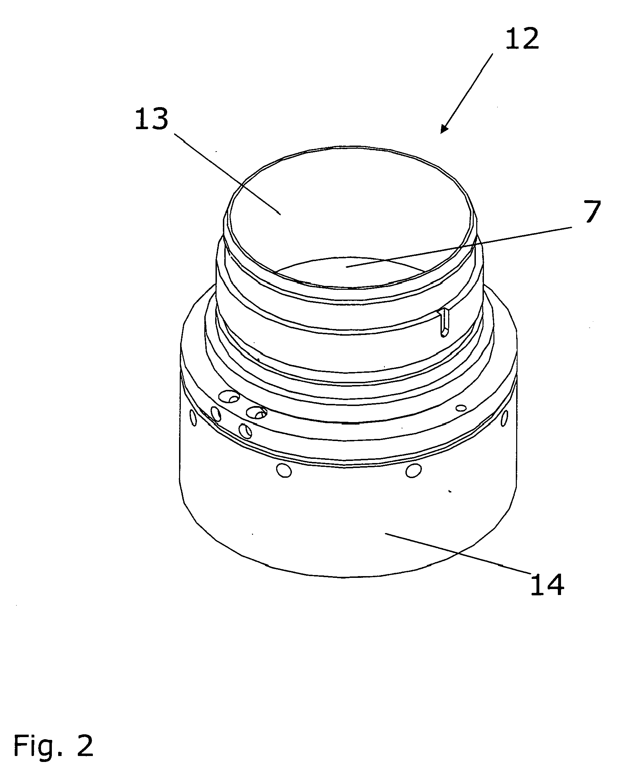

Eine Halterung **12** des optischen Elements 7 ist gemäß **Fig. 2** im Wesentlichen durch eine zylindrische Aufnahme **13** und einen zylindrischen Halter **14** ausgebildet.

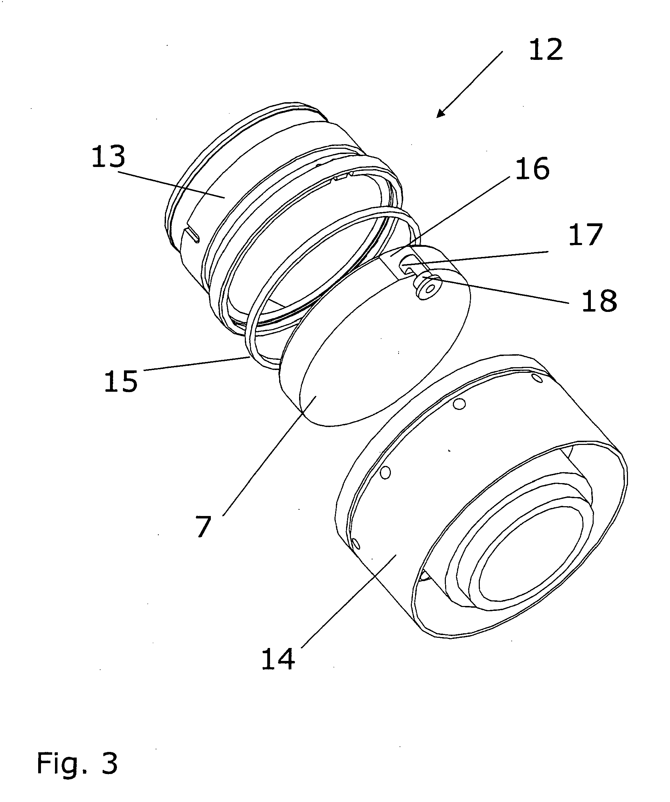

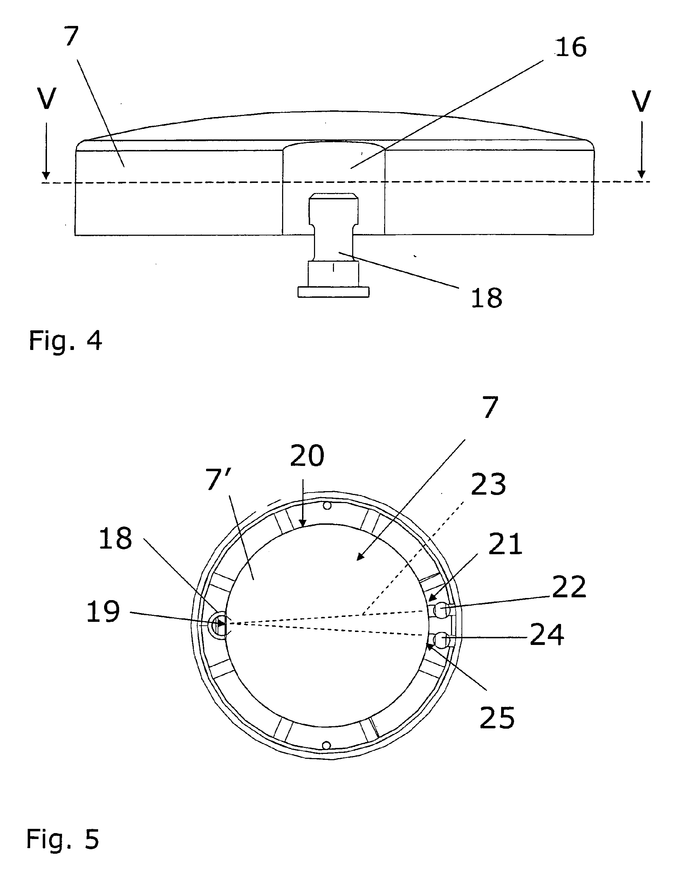

Der Zusammenbau der Halterung 12 ergibt sich aus **Fig. 3.** Die Aufnahme 13 weist einenends eine konzentrische Vertiefung auf, in die ein Haltering **15** eingesetzt werden kann, auf dem das optische Element 7 aufliegen kann. Das optische Element ist bis auf eine Profilierung **16** kreisrund ausgebildet. An der planen Profilierung 16 kann ein Absatz **17** eines an dem Halter 14 befestigbaren Klemmkörpers **18** anliegen und das optische Element 7 gegen ein Verdrehen sichern. Diese verdrehsichere Anlage ist in **Fig. 4** deutlicher dargestellt.

Das in der **Fig. 5** gezeigte als Linse ausgebildete optische Element 7 kann beispielsweise in einem Laserschneidkopf verwendet werden. Das optische Element 7 weist eine Reflexionsfläche **19** auf, die als planer Flächenanschliff an der Umfangsfläche **20** des optischen Elements 7 gebildet ist. An der Reflexionsfläche 19 kann der nicht bildlich dargestellte Klemmkörper mit einer Druckfläche angreifen, um das optische Element 7 verdrehsicher zu justieren. Die Halterung des optischen Elements weist an einer ersten Position **21** der Umfangsfläche 20 des optischen Elements 7 eine Leuchtdiode **22** auf. Die Leuchtdiode 22 kann vor oder während des Betriebs des Lasers kontinuierlich oder in bestimmten zeitlichen Intervallen einen Lichtstrahl **23** ausstrahlen, der in das Volumen **7'** eintritt und an der Reflexionsfläche 19 reflektiert wird. Der Lichtstrahl 23 trifft nach der Reflexion auf eine Photodiode **24,** die an einer zweiten Position **25** der Umfangsfläche 20 an der Halterung des optischen Elements 7 befestigt ist. Der Zustand oder die Aktivität der Photodiode 24 kann überprüft werden. Die Photodiode 24 dient der Erfassung der von dem optischen Element 7 absorbierten Strahlungswärme bzw. Strahlungsintensität infolge der Verschmutzung des optischen Elements 7 während der Laserbearbeitung. Bei zunehmender Strahlungsintensität nimmt der Photostrom zu. Aus der Veränderung der Strahlintensität (Änderung des Photostroms gegenüber einem Referenzphotostrom) kann somit auf die Veränderung des optischen Elements 7 bis zu einer daraus resultierenden Materialbeschädigung geschlossen werden.

Die Leuchtdiode 22 und die Photodiode 24 sind Teil einer Strahlungsmesseinrichtung, die in der nicht bildlich dargestellten Halterung des optischen Elements integriert ist. Alternativ kann die Temperatur des optischen Elements 7 auch durch einen im Klemmkörper der Halterung des optischen Elements positionierten Temperatursensor gemessen werden. Es ist nicht notwendig, dass der Flächenanschliff eine plane Fläche ist. Der Flächenanschliff kann als profilierter Flächenanschliff, insbesondere als Kerbe, ausgebildet sein. Die Oberfläche des Flächenanschliffs kann geschliffen, poliert oder in einer anderen Weise bearbeitet sein.

### BEZUGSZEICHEN

- **1**: Laserbearbeitungsanlage
- **2**: CO₂-Laser
- **3**: Steuereinrichtung
- **4**: Laserbearbeitungskopf
- **4a**: Düse
- **5**: Werkstückauflage
- **6**: Laserstrahl
- **7**: Fokussierlinse
- **8**: Werkstück
- **9**: Schneidgas
- **10**: Absaugeinrichtung
- **11**: Absaugkammer
- **12**: Halterung
- **13**: Aufnahme
- **14**: Halter
- **15**: Haltering
- **16**: Profilierung
- **17**: Absatz
- **18**: Klemmkörpers
- **19**: Reflexionsfläche
- **20**: Umfangsfläche
- **21**: erste Position der Umfangsfläche
- **22**: Leuchtdiode
- **23**: Lichtstrahl
- **7'**: Volumen
- **24**: Photodiode
- **25**: Zweite Position der Umfangsfläche

## Patentansprüche

1. Optisches Element (7) zum Einbau in eine Halterung an einer Laserbearbeitungsmaschine, **dadurch gekennzeichnet, dass** das optische Element (7) an seiner Umfangsfläche (20) mindestens eine Profilierung (16) aufweist.

2. Optisches Element nach Anspruch 1, **dadurch gekennzeichnet, dass** die Profilierung als Kerbe ausgebildet ist.

3. Optisches Element nach Anspruch 1, **dadurch gekennzeichnet, dass** die Profilierung (16) als planer Flächenanschliff ausgebildet ist.

4. Optisches Element nach Anspruch 3, **dadurch gekennzeichnet, dass** der plane Flächenanschliff als Reflexionsfläche (19) zur Reflexion eines Lichtstrahls ausgebildet ist.

5. Optisches Element nach einem der Ansprüche 2 bis 4, **dadurch gekennzeichnet, dass** der Flächenanschliff eine geschliffene oder polierte Oberfläche aufweist.

6. Halterung eines optischen Elements (1) nach einem der Ansprüche 1 bis 5, **gekennzeichnet durch** einen gefedert gelagerten Klemmkörper mit einer Druckfläche zum Aufbringen von Druck in radialer Richtung auf die Profilierung des optisches Elements (7).

7. Halterung nach Anspruch 6, , **dadurch gekennzeichnet, dass** der Klemmkörper einen Temperatursensor zur Temperaturmessung des optischen Elements (7) umfasst.
